# EUROPÄISCHE PATENTSCHRIFT

(11) **EP 0 662 885 B1**
(45) Veröffentlichungstag und Bekanntmachung des Hinweises auf die Patenterteilung: **17.12.1997**
(21) Anmeldenummer: 93920777.5
(22) Anmeldetag: 20.09.1993
(51) Int. Cl.: B60S 1/20, B60S 1/16

(54) **ÜBERSETZUNGSGETRIEBE FÜR LINEARWISCHANLAGEN**
REDUCTION GEAR FOR LINEAR WASHING INSTALLATIONS
REDUCTEUR POUR INSTALLATIONS LINEAIRES DE LAVAGE

(30) Priorität: 10.10.1992 DE 4234201
(43) Veröffentlichungstag der Anmeldung: 19.07.1995
(73) Patentinhaber: ITT Automotive Europe GmbH, 60488 Frankfurt am Main (DE)
(72) Erfinder: MAYER, Günter, D-71732 Tamm (DE); SCHOLL, Wolfgang, D-74376 Gemmrigheim (DE)
(74) Vertreter: Portwich, Peter
(86) Internationale Anmeldenummer: EP9302544
(87) Internationale Veröffentlichungsnummer: WO9408826

(56) Entgegenhaltungen:
- DE-A- 2 919 240
- DE-A- 4 006 733
- DE-U- 9 206 963
- FR-A- 1 015 830
- FR-A- 1 179 118

## Beschreibung

Die Erfindung betrifft ein Übersetzungsgetriebe mit den Merkmalen des Oberbegriffs des Anspruchs 1.

Das Problem von Übersetzungsgetrieben der eingangs genannten Art, wie sie z. B. in der DE-C-29 19 240 beschrieben sind, besteht darin, daß die erforderliche Übersetzung nur mit hohem technischen Aufwand erreichbar ist, was zwangsläufig Teile voraussetzt, die einem Verschleiß ausgesetzt sind, da das Getriebe erheblichen Kräften ausgesetzt ist.

Aus der FR-A-1 015 830 ist eine Scheibenwischeranlage für Kraftfahrzeuge ersichtlich, die ein Übersetzungsgetriebe aufweist, dessen abtriebsseitige Bewegungen ausübendes Teil ein Seilrad ist, auf dessen Umfang das Antriebsseil für einen hin- und herbewegbaren Schlitten, der einen Wischerarm trägt, verspannt ist. Das Seilrad ist drehfest an einem Ende einer Hohlwelle befestigt, welche in einer Bohrung einer Gehäuseplatte gelagert ist und diese durchgreift. Auf dem die Gehäuseplatte durchgreifenden Ende der Hohlwelle ist drehfest ein zentrales Zahnrad mit Außenverzahnung befestigt, welches mit drei dezentralen Zahnrädern mit Außenverzahnung in Eingriff steht, die wiederum an der vom Seilrad abgewandten Seite an der Gehäuseplatte drehbar gelagert sind. Ein äußeres Zahnrad mit Innenverzahnung übergreift diese Zahnräder und steht außerdem mit den drei zentralen Zahnrädern in Eingriff. Auf der Stirnseite und dem Umfang des äußeren Zahnrades ist drehfest eine Abdeckung befestigt. Eine Antriebswelle für das Übersetzungsgetriebe ist innerhalb der zuvor beschriebenen Hohlwelle gelagert und drehfest mit der Abdeckung des Außenzahenrades verbunden. Die pendelnde Antriebsbewegung für das Übersetzungsgetriebe wird an der dem Außenzahnrad gegenüberliegenden Seite des Übersetzungsgetriebes über ein zusätzliches Zahnradgetriebe in die Antriebswelle eingeleitet. Nachteilig an diesem Übersetzungsgetriebe ist sein komplizierter Aufbau sowie seine große Bauhöhe in axialer Richtung.

Der Erfindung liegt die Aufgabe zugrunde, das gattungsgemäße Übersetzungsgetriebe zu vereinfachen und seine axiale Bauhöhe zu verringern.

Die gestellte Aufgabe wird erfindungsgemäß durch die Merkmale des Anspruchs 1 gelöst.

Die Erfindung sieht vor, daß das abtriebsseitige Bewegungen ausübende Teil als hohlzylindrisches topfförmiges Teil ausgebildet ist und gleichzeitig ein Gehäuse für das Übersetzungsgetriebe ist. Das topfförmige Teil erfüllt somit zwei Funktionen. Zum einen nimmt es alle Teile des Übersetzungsgetriebes auf und schützt es vor Beschädigungen, zum anderen dient es gleichzeitig als dasjenige Teil, das auf den Schlitten direkt oder indirekt Kraft ausübt. Da sich außerdem die mit dem topfförmigen Teil verbundene Nabe mit Außenzahnrad in den Hohlraum des topfförmigen Teiles erstreckt, weist das Übersetzungsgetriebe ein geringe Bauhöhe in axialer Richtung auf.

Weitere zweckmäßige Ausgestaltungen der Erfindung gehen aus den Unteransprüchen hervor.

Eine zweckmäßige Ausgestaltung sieht vor, daß drei mit dem Außenzahnrad der Nabe und dem Zahnrad der Welle kämmende Zahnräder vorgesehen sind. Hierbei ist es zweckmäßig, wenn die Achsen der Zahnräder mit Abstand zur und gleichmäßig um die Achse der Welle angeordnet sind. Dadurch ist eine gleichmäßige Belastung und Kräfteverteilung innerhalb des Gehäuses gewährleistet. Ferner sieht eine besonders zweckmäßige Ausgestaltung der Erfindung vor, daß die Zylinderstifte fest mit einem Montagerahmen (Die Montageplatte) der Vorrichtung verbunden sind. Der Montagerahmen (Die Montageplatte) ist ein Tragteil, mit dem alle wesentlichen Teile der Vorrichtung und somit auch das Übersetzungsgetriebe lösbar verbindbar sind.

Ferner sieht eine besonders vorteilhafte Ausgestaltung der Erfindung vor, daß die radiale Außenseite des Gehäuses gewindeartige Nuten aufweist, die mit dem als Seil oder Riemen ausgebildeten Zugorgan in Wirkverbindung stehen. Um das erheblichen Kräften ausgesetzte Seil ordnungsgemäß spannen zu können, sieht eine weitere vorteilhafte Maßnahme der Erfindung vor, daß das als Guß- oder Spritzgußteil ausgebildete Gehäuse eine Spanneinrichtung für das Seil aufweist.

Ein Ausführungsbeispiel der Erfindung ist in der Zeichnung schematisch dargestellt und wird im folgenden näher erläutert.

Es zeigen
- Fig. 1: eine Linearwischanlage mit Übersetzungsgetriebe,
- Fig. 2: die in Fig. 1 dargestellte Linearwischanlage in Richtung des Pfeiles II nach Fig. 1,
- Fig. 3: den mit III bezeichneten Teil nach Fig. 1 vergrößert dargestellt und
- Fig. 4: einen Schnitt entlang der Linie IV-IV nach Fig. 3

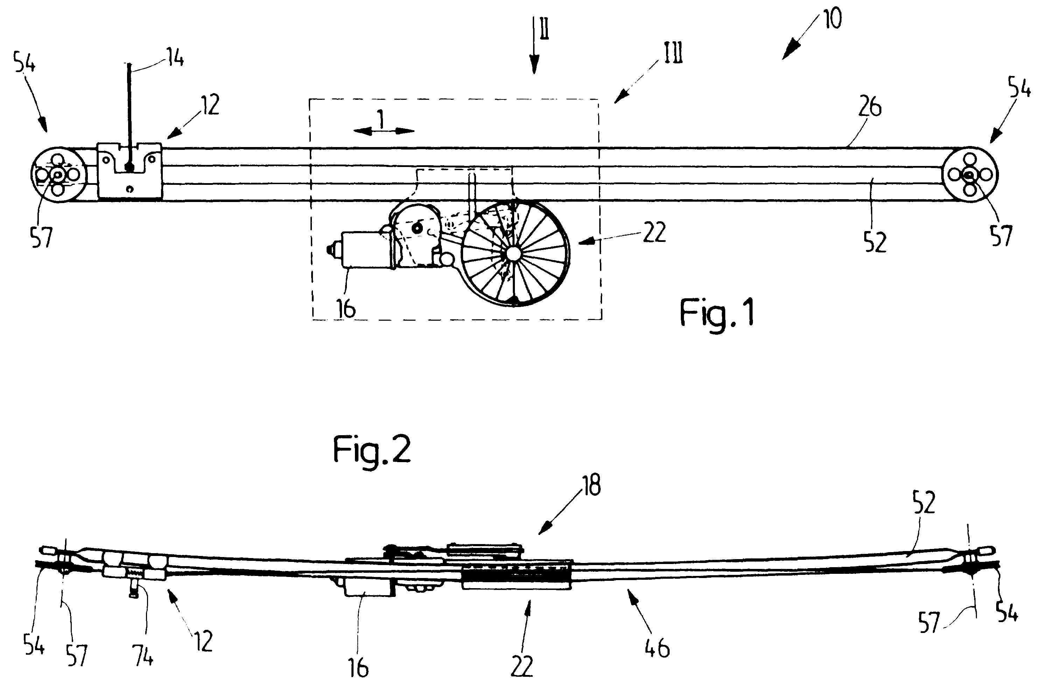

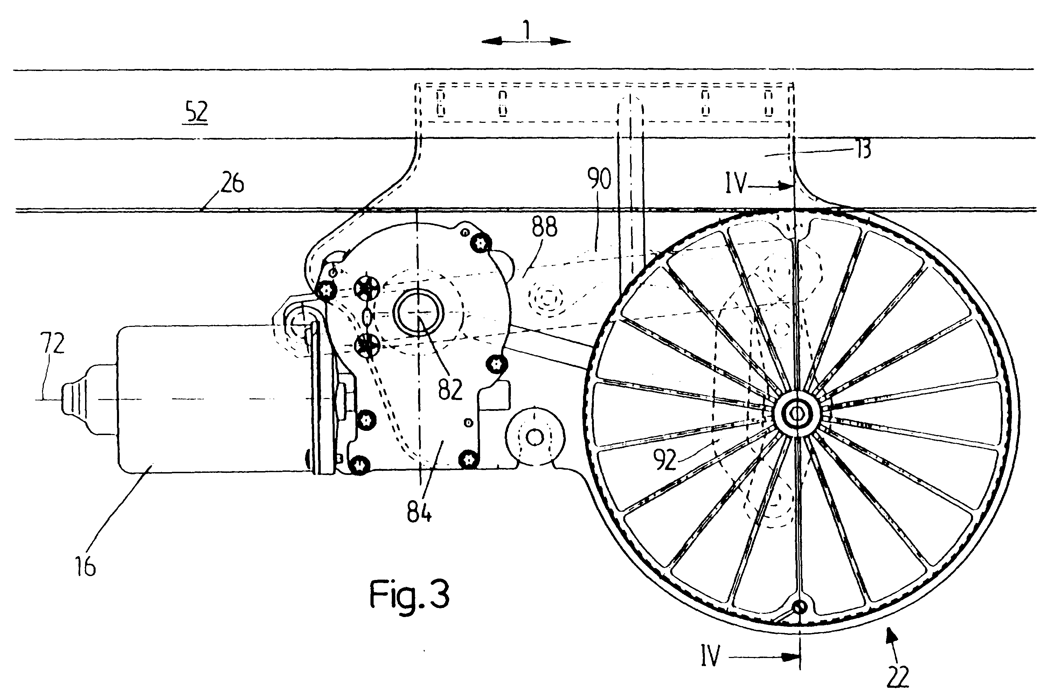

In den Fig. 1 und 2 sind im Zusammenhang mit den Fig. 3 - 4 eine Vorrichtung 10 bzw. Teile dieser Vorrichtung zum Reinigen von Windschutzscheiben, Fenstern oder optischen Einrichtungen dargestellt. Diese als Linearwischeranlage funktionierende Vorrichtung 10 weist einen von einem Hin- und Herbewegungen ausübenden Schlitten 12 getragenen Wischerarm 14 sowie ein mit einer Antriebsvorrichtung 16 zusammenarbeitendes und den Schlitten 12 antreibendes Getriebe 18 zum Umwandeln von Drehbewegungen in schwingende Bewegungen auf, das abtriebsseitig mit einer schwingende Bewegungen ausübenden Welle 20 verbunden ist.

Die Welle 20 ist das antreibende Teil eines Übersetzungsgetriebes 22 für schwingende Bewegungen. Das abtriebsseitige Bewegungen ausübende Teil 24 des Getriebes 22 treibt den Schlitten 12 über ein Zug- und/oder Druckorgan 26 an.

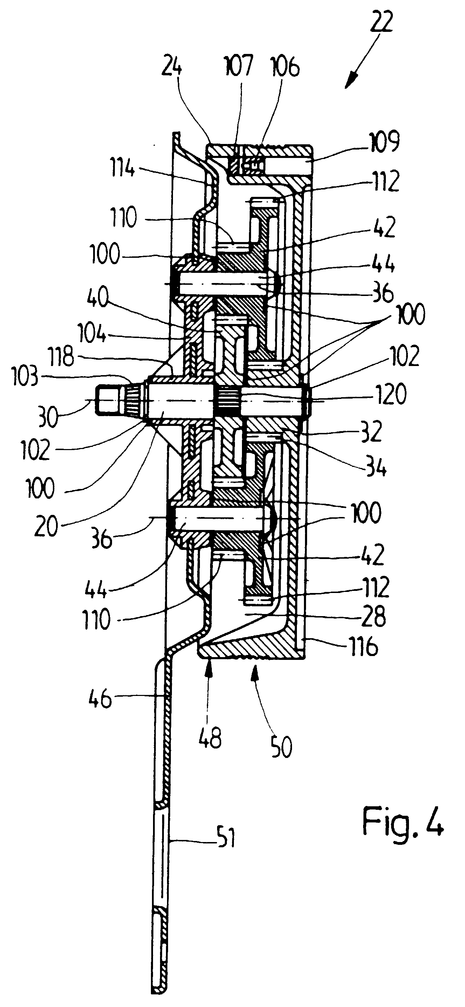

Man erkennt (vgl. insbesonders Fig. 4), daß das abtriebsseitige Bewegungen ausübende Teil 24 ein Abschnitt eines auf der Welle 20 gelagerten und als Gehäuse ausgebildeten Hohlzylinders ist. Das Gehäuse 24 weist eine im Innenraum 28 des Übersetzungsgetriebes 22 angeordnete und koaxial mit der Achse 30 der Welle 20 verlaufende Nabe 32 mit Außenzahnrad 34 auf und ist mit einer außenseitigen Vertiefung 116 versehen. Im Gehäuse 24 sind ferner drei um jeweils eine feste Achse 36 verdrehbare und mit dem Außenzahnrad 34 der Nabe 32 sowie einem mit der Welle 20 über Riffelung 120 drehfest verbundenen Zahnrad 40 kämmende Zahnräder 42 angeordnet. Die Zahnräder 42 sind von ortsfesten Zylinderstiften 44 getragen und bestehen aus jeweils einem großen Ritzel 112 und einem kleinen Ritzel 110, durch die das Übersetzungsverhältnis des Übersetzungsgetriebes definiert ist. Das Verstellungsver-mögen des Übersetzungsgetriebes 22 mit Bezug auf den Schlitten 12 ist selbstverständlich auch vom Außendurchmesser des im Querschnitt kreisrunden Gehäuses 24 abhängig. Ferner lassen die Fig. 1 und 4 erkennen, daß eine Montageplatte 46 vorgesehen ist, die die Zylinderstifte 44, die Welle 20, die Antriebseinrichtung 16, das Getriebe 18 sowie das Übersetzungsgetriebe 22 trägt und eine in Bewegungsrichtung (Doppelpfeil 1) des Schlittens 12 sich erstreckende Führungsstange 52 für den Schlitten 12 sowie eine Aufnahme 51 für das Untersetzungsgetriebe aufweist. Die axialen Enden der Führungsstange 52 weisen jeweils eine Umlenkrolle 54 für das als Seil ausgebildete Zugorgan 26 auf.

Die Fig. 4 läßt erkennen, daß die radiale Außenseite 48 des Gehäuses 24 gewindeartige Nuten 50 aufweist, die mit dem Seil 26 in Wirkverbindung stehen.

Im einzelnen zeigen die Figuren, daß die Montageplatte 46 ein gestanztes oder gegossenes Teil mit einer Führungsstange 52 ist, die sich in Bewegungsrichtung 1 des Schlittens 12 erstreckt. Im mittleren Bereich der Montageplatte 46 und unterhalb der Führungsstange 52 sind die als Elektromotor ausgebildete Antriebseinrichtung 16 mit einem Untersetzungsgetriebe 84 sowie das Getriebe 18 und das Übersetzungsgetriebe 22 angeordnet. Diese Teile der Vorrichtung sind von einer Schürze 13, die sich nach unten hin erstreckt, getragen. Die letztgenannten Teile der Vorrichtung sind mit der Schürze durch Schrauben, Nieten oder dergleichen verbunden. Der nicht näher dargestellte Rotor des Motors 16 dreht sich um eine Achse 72, die etwa parallel zur Bewegungsrichtung 1 des Schlittens, jedoch senkrecht zur Achse 30 der Welle 20 verläuft. Da die Drehzahl des Motors 16 regelmäßig zu groß ist, ist das Untersetzungsgetriebe 84 zwischen dem Motor 16 und das Getriebe 18 geschaltet. Das Getriebe 18 ist von einer Kurbelstange des Untersetzungsgetriebes 84, die sich um die Achse 82 dreht, angetrieben. Das Getriebe 18 besteht aus den Stangen 88, 90 und 92, durch die die Drehbewegungen der Kurbelstange in schwenkbare Bewegungen der Welle 20 umgewandelt werden.

Die Zwischenschaltung des Übersetzungsgetriebes 22 zwischen das Getriebe 18 und das Seil 26 hat zur Folge, daß die Schwenkbewegungen der Welle 20 in schwingende Bewegungen des Gehäuses 24 umgewandelt werden. Je nachdem, wie die Zahnräder 40 und 42 ausgebildet sind und welches Übersetzungsverhältnis zwischen diesen Zahnrädern und dem Zahnrad 40 sowie dem Außenzahnrad 34 herrscht, führt das Gehäuse 24 mehrfach Drehbewegungen in einer bzw. anderer Richtung aus. Selbstverständlich ist es möglich, die Zahnräder 40, 42 und 34 so zu verändern, daß das Übersetzungsverhältnis verändert wird. Die Zahnräder 40, 42 sowie das Gehäuse 24 können aus gespritzten Kunststoffteilen oder Metall bestehen. Die Montageplatte 46 weist im Bereich des Übersetzungsgetriebes 22 eine Ausnehmung auf, in welche das Tragstück 104 mit Halterohr 118 des Übersetzungsgetriebes 22 einbringbar ist und diese Ausnehmungen formschlüssig ausfüllt. Die Zylinderstifte 44 sind mit dem Tragstück 104 fest, während die Welle 20 mit dem Tragstück 104 verdrehbar verbunden ist. Um axiale Verstellungen der Welle 20 zu vermeiden, sind mit der Welle 20 Scheiben 100 und Sicherungsringe 102 lösbar verbunden. Eine drehfeste Verbindung zwischen der Welle 20 und dem Getriebe 18 ist dadurch gewährleistet, daß ihr zum Getriebe 18 gerichtetes Ende eine Riffelung 103 besitzt. Die Steifigkeit des Tragstückes 104 im Bereich des Übersetzungsgetriebes 22 ist dadurch gewährleistet, daß die Montageplatte 46 in diesem Bereich uneben ausgebildet ist, was durch die in den Innenraum 28 hineinragende Ringvertiefung 114 dokumentiert ist.

Wird der Motor 16 eingeschaltet, werden die Drehbewegungen seines Rotors über das Untersetzungsgetriebe 84 auf das Getriebe 18 übertragen, das auf die Welle 20 Schwenkbewegungen ausübt. Diese Schwenkbewegungen der Welle 20 werden über die Zahnräder 40, 44 und 34 auf das Gehäuse 24 übertragen, das dabei mehrere Umdrehungen im Uhrzeigersinn und sodann die gleiche Anzahl der Drehungen gegen den Uhrzeigersinn ausübt. Da das Seil 26 mit dem Gehäuse 24 unverrutschbar verbunden und mittels einer in einer Bohrung 109 mit Gewinde und Druckkörper 107 angeordneten Spannschraube 106 festgehalten ist, wird es in Richtung des Doppelpfeiles 1 (vgl. Fig. 1) hin- und herbewegt und somit auch der Schlitten 12 mit dem Wischerarm 14 mitgenommen. Die Geschwindigkeit des Schlittens 12 ist im Verstellbereich nicht konstant. Die maximale Geschwindigkeit erreicht der Schlitten etwa im mittleren Bereich zwischen den beiden, um die Achsen 57 verdrehbaren Umlenkrollen 54, während sie in den Endbereichen (vgl. Fig. 1 und 2) allmählich abnimmt, bis sie den Wert Null erreicht hat. Danach bewegt sich der Schlitten 12 in entgegengesetzter Richtung und nimmt an Geschwindigkeit zu. Nach Erreichung der maximalen Geschwindigkeit, d. h. wenn der Schlitten 12 etwa im Bereich des Übersetzungsgetriebes 22 angeordnet ist, nimmt seine Geschwinaigkeit wieder ab, und zwar bis zum Wendepunkt, wo die Geschwindigkeit gleich 0 ist. Diese Hin- und Herbewegungen wiederholen sich solange, solange der Elektromotor 16 eingeschaltet ist.

Der Wischerarm 14 ist etwa senkrecht zur Führungsstange 52 angeordnet und vom Bolzen 74 getragen. Durch die Anordnung von Laufrollen, die mit ihren Bolzen über Sicherungsscheiben verbunden sind, ist ein ordnungsgemäßer Bewegungsablauf des Schlittens 12 gewährleistet. Da das Seil 26 während der Bewegung des Schlittens 12 erheblichen Kräften ausgesetzt ist, muß es im Bedarfsfall gespannt werden, wozu eine Spannvorrichtung mit einer Schraube vorgesehen ist, die sich an Scheiben abstützt.

## Patentansprüche

1. Übersetzungsgetriebe (22) für Vorrichtungen zum Reinigen von Windschutzscheiben, Fenstern oder optischen Einrichtungen, die einen von einem Hin- und Herbewegungen ausübenden Schlitten (12) getragenen Wischerarm (14) sowie ein mit einer Antriebseinrichtung (16) zusammenarbeitendes und den Schlitten (12) antreibendes Getriebe (18) zum Umwandeln von Drehbewegungen in schwingende Bewegungen aufweisen, das abtriebsseitig mit einer schwingende Bewegungen ausübenden Welle (20) verbunden ist, wobei die Welle (20) das antreibende Teil des Übersetzungsgetriebes (22) ist, das abtriebsseitig Bewegungen ausübende Teil (24) des Übersetzungsgetriebes (22), welches den Schlitten (12) über ein Zug- und/oder Druckorgan (26) antreibt, ein Abschnitt eines auf der Welle (20) drehbar gelagerten Hohlzylinders ist und eine koaxial mit der Achse (30) der Welle (20) verlaufende Nabe (32) mit Außenzahnrad (34) aufweist und wobei das Außenzahnrad (34) mit mindestens einem Zahnrad (42) mit zwei Zahnreihen (110, 112) kämmt, das seinerseits von einem mit der Welle (20) drehfest verbundenen Zahnrad (40) angetrieben ist und wobei eine Montageplatte (46) oder dgl. vorgesehen ist, die das Übersetzungsgetriebe (22) trägt, dadurch **gekennzeichnet**, daß das abtriebsseitige Bewegungen ausübende Teil (24) als hohlzylindrisches topfförmiges Teil (24) ausgebildet ist und gleichzeitig die Funktion eines Gehäuses für das Übersetzungsgetriebe (22) ausübt, daß sich die Nabe (32) mit Außenzahnrad (34) axial in den Hohlraum (28) des Teiles (24) erstreckt und daß die Zahnräder (34, 40, 42) in dem Hohlraum (28) des Teiles (24) angeordnet sind.

2. Übersetzungsgetriebe (22) nach Anspruch 1, dadurch **gekennzeichnet**, daß die Nabe (32) mit Außenzahnrad (34) insgesamt einstückig mit dem Teil (24) hergestellt ist.

3. Übersetzungsgetriebe (22) nach einem der Ansprüche 1 oder 2, dadurch **gekennzeichnet**, daß drei mit dem Außenzahnrad (34) der Nabe (32) und dem Zahnrad (40) der Welle (20) kämmende Zahnräder (42) vorgesehen sind.

4. Übersetzungsgetriebe (22) nach einem der Ansprüche 1 bis 3, dadurch **gekennzeichnet**, daß die Achsen (36) der Zahnräder (42) mit Abstand zur und gleichmäßig um die Achse (30) der Welle (20) angeordnet sind.

5. Übersetzungsgetriebe (22) nach einem der Ansprüche 1 bis 4, dadurch **gekennzeichnet,** daß die Zahnräder (42) von Zylinderstiften (44) oder Bolzen getragen werden.

6. Übersetzungsgetriebe (22) nach einem der Ansprüche 1 bis 5 mit einem Montagerahmen, dadurch **gekennzeichnet**, daß die Zylinderstifte (44) fest mit der Montageplatte (46) der Vorrichtung (10) verbunden sind.

7. Übersetzungsgetriebe (22) nach einem der Ansprüche 1 bis 6, dadurch **gekennzeichnet**, daß das Teil (24) zur Montageplatte (46) hin offen ist.

8. Übersetzungsgetriebe (22) nach einem der Ansprüche 1 bis 7, dadurch **gekennzeichnet**, daß die radiale Außenseite (48) des Gehäuses (24) gewindeartige Nuten (50) aufweist, die mit dem als Seil oder Riemen ausgebildeten Zugorgan (26) in Wirkverbindung stehen.

9. Übersetzungsgetriebe (22) nach einem der Ansprüche 1 bis 8, dadurch **gekennzeichnet,** daß das als Guß- oder Spritzgußteil ausgebildete Gehäuse (24) eine Spanneinrichtung für das Seil (26) aufweist.

10. Übersetzungsgetriebe (22) nach einem der Ansprüche 1 bis 9, dadurch **gekennzeichnet**, daß das Übersetzungsgetriebe (22) mit der Montageplatte (46) lösbar verbindbar ist.

## Claims

1. Transmission gear (22) for use with systems for cleaning windscreens, window-panes, or optical instruments, comprising a wiper arm (14) supported by a carriage (12) performing reciprocating movements, and a gear (18) for transforming rotary movements into oscillating movements, cooperating with a driving means (16) and actuating the carriage (12), which gear, on the driven side, is connected to a shaft (20) performing oscillating movements, with the shaft (20) being the actuating part of the transmission gear (22), and with the part (24) of the transmission gear (22) performing movements on the driven side and actuating the carriage (12) by way of a tensile and/or thrust member (26) being a section of a hollow cylinder, that is rotatably arranged on the shaft (20), and comprising a hub (32) with an external gear (34) extending in coaxial relationship with the axis (30) of the shaft (20), and with the external gear (34) being in engagement with at least one toothed gear (42) having two rows of teeth (110, 112) which, in turn, is driven by a toothed gear (40) connected in non-rotating manner to the shaft (20), and with the provision of a mounting plate (4), or the like, which carries the transmission gear (22),
**characterized** in that the part (24) which, on the driven side, performs movements is configured as a hollow cylindrical pot-shaped part (24) and, additionally, assumes the function of a housing for the transmission gear (22), in that the hub (32) with the external gear (34) axially extends into the cavity (28) of the part (24), and in that the toothed gears (34, 40, 42) are provided within the cavity (28) of the part (24).

2. Transmission gear (22) as claimed in claim 1,
**characterized** in that the hub (32) with the external toothed gear (34) generally is integrally formed with the part (24).

3. Transmission gear (22) as claimed in either one of claims 1 or 2,
**characterized** in that three gears (42) are provided and mesh with the external gear (35) of the hub (32) and the toothed gear (40) of the shaft (20).

4. Transmission gear (22) as claimed in any one of claims 1 to 3,
**characterized** in that the axes (36) of the toothed gears (42) are provided at a distance from and uniformly about the axis (30) of the shaft (20).

5. Transmission gear (22) as claimed in any one of claims 1 to 4,
**characterized** in that the toothed gears (42) are carried by cylindrical pins (44) or bolts.

6. Transmission gear (22) as claimed in any one of claims 1 to 5 having a mounting frame,
**characterized** in that the cylindrical pins (44) are rigidly connected to the mounting plate (46) of the arrangement (10).

7. Transmission gear (22) as claimed in any one of claims 1 to 6,
**characterized** in that the part (24) is open toward the mounting plate (46).

8. Transmission gear (22) as claimed in any one of claims 1 to 7,
**characterized** in that the radial outer side (48) of the housing (24) includes thread-type grooves (50) which are in operative engagement with the tensile member (26) formed as a cable or belt.

9. Transmission gear (22) as claimed in any one of claims 1 to 8,
**characterized** in that the housing (24) is formed as a cast or injection-moulded element and has a clamping means for the cable (26).

10. Transmission gear (22) as claimed in any one of claims 1 to 9,
**characterized** in that the transmission gear (22) is detachably connected to the mounting plate (46).

## Revendications

1. Mécanisme multiplicateur (22), pour dispositifs de nettoyage de pare-brise, fenêtres ou dispositifs optiques qui comprennent un bras d'essuie-glace (14), porté par un chariot (12) exécutant des mouvements dans un sens et dans l'autre, et un mécanisme (18), servant à transformer les mouvements de rotation en mouvements oscillants, qui coopère avec un dispositif d'entraînement (16) et entraîne le chariot (12) et qui est relié du côté de sortie à un arbre (20) exécutant des mouvements oscillants, tandis que l'arbre (20) constitue la partie menante du mécanisme multiplicateur (22) et que la pièce (24) du mécanisme multiplicateur (22) exécutant des mouvements du côté de sortie, qui entraîne le chariot (12) par l'intermédiaire d'un organe de traction et/ou de poussée (26), est une partie d'un cylindre creux monté rotatif sur l'arbre (20) et comporte un moyeu (32) à roue dentée extérieure (34) orienté d'une manière coaxiale à l'axe (30) de l'arbre (20), la roue dentée extérieure (34) engrenant avec au moins une roue dentée (42) comportant deux rangées de dents (110, 112) et elle-même entraînée par une roue dentée (40) calée sur l'arbre (20), tandis qu'il est prévu une plaque de montage (46) ou analogue qui porte le mécanisme multiplicateur (22), caractérisé en ce que la pièce (24) exécutant des mouvements du côté de sortie est constituée d'une pièce (24) en cuvette cylindrique creuse et remplit en même temps la fonction d'un boîtier pour le mécanisme multiplicateur (22), en ce que le moyeu (32) à roue dentée extérieure (34) s'étend axialement dans la cavité (28) de la pièce (24) et en ce que les roues dentées (34, 40, 42) sont disposées dans la cavité (28) de la pièce (24).

2. Mécanisme multiplicateur (22) selon la revendication 1, caractérisé en ce que le moyeu (32) à roue dentée extérieure (34) est réalisé entièrement d'une seule pièce avec la pièce (24).

3. Mécanisme multiplicateur (22) selon l'une des revendications 1 ou 2, caractérisé en ce qu'il est prévu trois roues dentées (42) engrenant avec la roue dentée extérieure (34) du moyeu (32) et la roue dentée (40) de l'arbre (20).

4. Mécanisme multiplicateur (22) selon l'une des revendications 1 à 3, caractérisé en ce que les axes (36) des roues dentées (42) sont disposés à distance de l'axe (30) de l'arbre (20) et d'une manière uniforme autour de cet axe.

5. Mécanisme multiplicateur (22) selon l'une des revendications 1 à 4, caractérisé en ce que les roues dentées (42) sont portées par des broches cylindriques (44) ou tronçons d'axe.

6. Mécanisme multiplicateur (22) selon l'une des revendications 1 à 5, comportant un châssis de montage, caractérisé en ce que les broches cylindriques (44) sont solidaires à demeure de la plaque de montage (46) du dispositif (10).

7. Mécanisme multiplicateur (22) selon l'une des revendications 1 à 6, caractérisé en ce que la pièce (24) s'ouvre en direction de la plaque de montage (46).

8. Mécanisme multiplicateur (22) selon l'une des revendications 1 à 7, caractérisé en ce que la face radialement extérieure (48) du boîtier (24) comporte des gorges (50) en forme de filetage qui coopèrent avec l'organe de traction (26) constitué d'un câble ou une courroie.

9. Mécanisme multiplicateur (22) selon l'une des revendications 1 à 8, caractérisé en ce que le boîtier (24) constitué d'une pièce coulée ou moulée par injection comporte un dispositif de mise sous tension du câble (26).

10. Mécanisme multiplicateur (22) selon l'une des revendications 1 à 9, caractérisé en ce que le mécanisme multiplicateur (22) peut être relié d'une manière amovible à la plaque de montage (46).
